# EUROPEAN PATENT APPLICATION

(11) **EP 2 965 792 A1**
(43) Date of publication of application: **13.01.2016**
(21) Application number: 15001036.1
(22) Date of filing: 10.04.2015
(51) Int. Cl.: A63F 13/211, A43B 3/00, G01C 22/00, A63F 13/235, A63F 13/212

(54) **BLUETOOTH/WI-FI SENSOR AND CONTROL FOR GAMES AND APPLICATIONS TO BE APPLIED TO CHILDREN FOOTWEAR**

(30) Priority: 12.05.2014 BR 1411379
(71) Applicant: Kidy Birigui Calçados Indústria e Comércio Ltda., CEP: 16203-125, Cidade de Birigui, SP (BR)
(72) Inventor: Ricardo, Gracia, 16200-253 Cidade de Birigui, SP (BR)
(74) Representative: Fernández-Pacheco, Aurelio Fernández

(57) **Abstract**

A BlueTooth/Wi-Fi sensor and control for games and applications to be applied to children footwear, comprising a microchip, a 20/32 battery (A), a PVC protective capsule (B), a cover (C), screws (D) and orifices (F) for the hoestring, to be used as a BlueTooth/Wi-Fi sensor and control for games and applications to be applied to children footwear and clothes.

## Description

### FIELD OF APPLICATION

The present utility model is directed to a device designed to be used as a Bluetooth/Wi-Fi sensor and control for games and applications to be applied to children footwear or clothes.

### BACKGROUND

In the market there is a transmitting chip that is placed in the sole (from the inside) of a sneaker plus a receiver that is connected to an ipod that is attached to the arm by a brace for supplying data such as the exercise time, the distance covered, the pace and calories while the user listens to music and jogs. After jogging, the user views a summary of the exercise and such data are sent to a web site in the internet wherein the user can follow its performance and even compare same with that of other users all over the world, besides been able to mark in a map the ways he/she follows or mark new ways to go.

There is a movement sensor, which is a part embedded in the cellular phone that simulates the inertial movement of a small circuit that has a small metal object inside a liquid. When the user rotates the cellular phone, for example, the object inside the liquid is inert, that is, motionless, while the walls of the circuit that are integral with the structure of the cellular phone will also turn. In its turn, the object hits one of the walls on the side opposite to the rotation.

The two state-of-the-art systems cited above are neither game controls nor children items.

### OBJECTS OF THE INVENTION

After several studies and research, a BlueTooth/Wi-Fi sensor and control for games and applications to be applied to children footwear was developed, whose technical benefit is its interaction with novel or already existing games, the function of which is to accumulate and control (count) points.

The device and the applications have been developed exclusively to children of both genders.

Thus, it is a Wi-Fi and BlueTooth device for counting points to be used in footwear and clothes, and can be connected to PCs, notebooks, tablets and cellular telephones having Android and Apple platforms.

The device sends a BlueTooth signal that is captured by the Wi-Fi device of cellular phones, PCs and tablets, and the signal is sent only when the device is moving, that is, while the footwear is being used.

The BlueTooth/Wi-Fi sensor and control for games and applications to be applied to children footwear is comprised of a microchip, a 20/32 battery and a PVC protective capsule.

Used as a web game control (joystick) in computers, tablets and cellular phones, free or previously paid games also can be played through the device.

The device can be lodged in the sole of the footwear, attached to the shoestring or clamped to the clothes.

Another function of the device is to record the time the footwear is actually used, turn this time into a score, and use said score in internet games or players communities.

The sensor can also be used with a 3G or 4G system, thus making it possible to localize the footwear or the child through Google maps or other applications.

### DESCRIPTION OF THE FIGURES

The BlueTooth/Wi-Fi sensor and control for games and applications to be applied to children footwear and its applicability can be devised after reading the following detailed description and viewing the accompanying illustrative drawings, references to which are made in order to better elucidate the description, wherein:

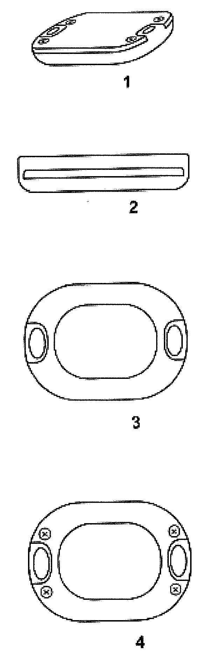

Figure 1 represents a perspective view;
Figure 2 represents a side view;
Figure 3 represents a rear view;
Figure 4 represents a front view;

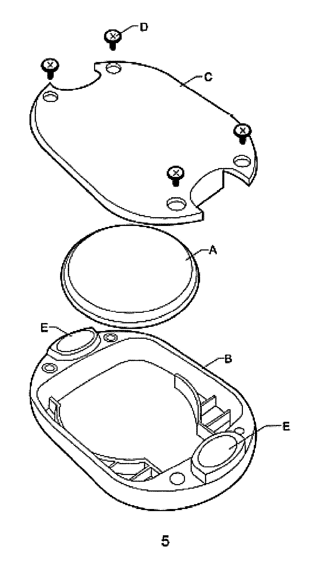

Figure 5 represents an exploded view;

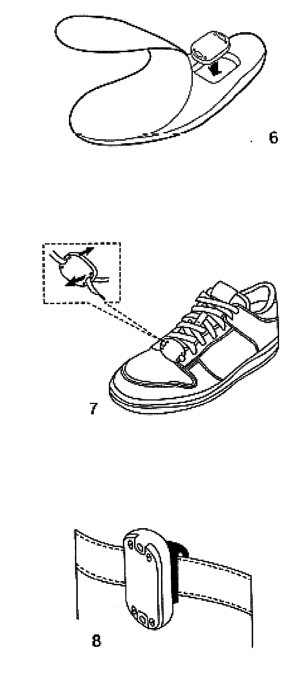

Figure 6 represents the device lodged inside the footwear;
Figure 7 represents the device attached to the shoestring;
Figure 8 represents the device clamped to the clothes.

### DETAILED DESCRIPTION OF THE INVENTION

In accordance with these illustrations and the details thereof shown, the BlueTooth/Wi-Fi sensor and control for games and applications to be applied to children footwear is comprised of a microchip, a 20/32 battery (A), a PVC protective capsule (B), a cover (C), screws (D) and orifices (E) for the shoestring.

Thus, the BlueTooth/Wi-Fi sensor and control for games and applications to be applied to children footwear fulfills the proposed objects thoroughly by performing in a practical, efficient and safe way the function designed thereto, providing benefits inherent to its applicability, and unique and new characteristics provided with innovative basic requirements.

## Claims

1. A BlueTooth/Wi-Fi sensor and control for games and applications to be applied to children footwear, **characterized by** being comprised of a microchip, a 20/32 battery (A), a PVC protective capsule (B), a cover (C), screws (D) and orifices (E) for the shoestring.

2. A BlueTooth/Wi-Fi sensor and control for games and applications to be applied to children footwear, **characterized in that** it is a Wi-Fi and BlueTooth device for counting points to be used in footwear and clothes that is connected to PCs, notebooks, tablets and cellular telephones having Android and Apple platforms.

3. The BlueTooth/Wi-Fi sensor and control for games and applications to be applied to children footwear, **characterized in that** it sends a BlueTooth signal that is captured by the Wi-Fi device of cellular phones, PCs and tablets, and wherein the signal is sent only when the device is moving, that is, while the footwear is being used.

4. The BlueTooth/Wi-Fi sensor and control for games and applications to be applied to children footwear, **characterized in that** it is used as an internet game control (joystick) in computers, tablets and cellular phones, and free or pre-paid games also can be played through the device.

5. The BlueTooth/Wi-Fi sensor and control for games and applications to be applied to children footwear, **characterized in that** the device can be lodged in the sole of the footwear, attached to the shoestring or clamped to the clothes.

6. The BlueTooth/Wi-Fi sensor and control for games and applications to be applied to children footwear, **characterized in that** it records the time the footwear is actually used, turns this time into a score, and uses said score in internet games or players communities.

7. The BlueTooth/Wi-Fi sensor and control for games and applications to be applied to children footwear, **characterized in that** the sensor can also to be used with a 3G or 4G system, thus making it possible to localize the footwear or the child through Google maps or other applications.
